# EUROPEAN PATENT APPLICATION

(11) **EP 4 826 633 A1**
(43) Date of publication of application: **21.10.2026**
(21) Application number: 24931096.2
(22) Date of filing: 04.07.2024
(51) Int. Cl.: G06Q 50/06, H02S 50/00, G06F 3/14

(54) **METHOD AND APPARATUS FOR MANAGING POWER SYSTEM INCLUDING PLURALITY OF SOLAR MODULES**

(30) Priority: 21.03.2024 KR 20240039385
(71) Applicant: Hanwha Solutions Corporation, Jung-gu Seoul 04541 (KR)
(72) Inventor: KOH, Ga Young, Seoul 04541 (KR); AHN, Hyung Joo, Seoul 04541 (KR); KIM, Jae Hwi, Seoul 04541 (KR)
(74) Representative: Mooser, Sebastian Thomas
(86) International application number: PCT/KR2024/009483
(87) International publication number: WO 2025/198098

(57) **Abstract**

The present disclosure relates to a method and apparatus for managing a power system including a plurality of solar modules. According to an embodiment of the present disclosure, provided is a method of managing a power system including a plurality of solar modules, the method including obtaining power generation information for the plurality of solar modules configuring the power system and power transfer information for at least one connection section through which power generated by the plurality of solar modules is transferred, generating information of interest about the power system, based on at least one of the power generation information and the power transfer information, and generating an interface displaying the information of interest on a virtual space representing the power system.

## Description

### Technical Field

The present disclosure relates to a method and apparatus for managing a power system including a plurality of solar modules. More particularly, the present disclosure relates to a method and apparatus for managing a power system by generating an interface displaying information of interest on a virtual space representing the power system.

### Background Art

Solar power generation is a power generation technology for generating electric power while scarcely generating pollution, through processes of directly collecting energy from the sun and converting the energy into electricity. Accordingly, solar power generation is sustainable energy that is growing rapidly with gaining attention as eco-friendly power generation.

Most electrical energy generation emits greenhouse gases and other air pollutants generated during burning of fossil fuels, which are major causes of climate change and air pollution. In this regard, consumption culture of efficiently using electricity and consumption of electrical energy through self-generation such as solar power generation may provide many merits to the environment, economy, and society.

Due to the above-mentioned merits, solar power generation systems have been designed and constructed in various sizes and forms, from small-scale household facilities to large-scale commercial power plants. Accordingly, there are users who manage solar power generation systems in various environments such as detached houses, apartment houses, and power generation facilities, and studies and development in terms of interfaces are continuously conducted to provide a user environment suitable for users in various environments.

The aforementioned background technology is technical information possessed by the inventor for derivation of the present disclosure or acquired by the inventor during the derivation of the present disclosure, and is not necessarily prior art disclosed to the public before the application of the present disclosure.

### Disclosure

### Technical Problem

The present disclosure provides a method and apparatus for managing a power system including a plurality of solar modules. Aspects of the present disclosure are not limited to those mentioned above, and other aspects and advantages of the present disclosure, which are not mentioned, will be understood from descriptions below and will become more apparent by embodiments of the present disclosure. In addition, the aspects and advantages of the present disclosure will be realized through means and combinations thereof in the claims.

### Technical Solution

As technical solutions for achieving technical problems described above, a first aspect of the present disclosure may provide a method of managing a power system including a plurality of solar modules, the method including obtaining power generation information for the plurality of solar modules configuring the power system and power transfer information for at least one connection section through which power generated by the plurality of solar modules is transferred, generating information of interest about the power system, based on at least one of the power generation information and the power transfer information, and generating an interface displaying the information of interest on a virtual space representing the power system.

A second aspect of the present disclosure may provide an apparatus for managing a power system including a plurality of solar modules, the apparatus including a communication module configured to perform communication, a memory storing at least one program, and a processor configured to operate by executing the at least one program, wherein the processor is further configured to control the communication module to obtain power generation information for the plurality of solar modules configuring the power system and power transfer information for at least one connection section through which power generated by the plurality of solar modules is transferred, generate information of interest about the power system, based on at least one of the power generation information and the power transfer information, and generate an interface displaying the information of interest on a virtual space representing the power system.

A third aspect of the present disclosure may provide a computer-readable recording medium having recorded thereon a program for executing the method of the first aspect of the present disclosure above on a computer.

Other aspects, features, and advantages may become clear from the following drawings, the claims, and the detailed description of the present disclosure.

### Advantageous Effects

According to the technical solutions of the present disclosure described above, a user experience may be improved by providing a user with a power generation status and a power transfer status for each module regarding a power system including a plurality of solar modules.

In addition, according to the technical solutions of the present disclosure, a user experience may be improved by providing a user with a power generation status, a power consumption status, and a power transfer status of a solar module and/or a load linked to a power storage device.

The effects of the embodiments are not limited to those mentioned above, and other effects that are not mentioned may be clearly understood by one of ordinary skill in the art from the present specification.

### Description of Drawings

FIG. 1 is a schematic configuration diagram of a management system including a power system and a management device, according to an embodiment.
FIG. 2 illustrates an example of an operating method of a management device.
FIGS. 3A to 3C are exemplary diagrams for describing an interface displaying information of interest about a plurality of solar modules or loads.
FIG. 4 is an exemplary diagram for describing an interface displaying a power transfer path for each of a plurality of solar modules.
FIG. 5 is an exemplary diagram for describing an embodiment of a process of generating information of interest.
FIGS. 6A and 6B are exemplary diagrams for describing an interface for providing a notification based on power system information.
FIGS. 7A to 7D are exemplary diagrams for describing an interface displaying a difference in power generation information for each solar module between a first time point and a second time point.
FIG. 8 is an exemplary diagram for describing an interface displaying a power transfer path for each load.
FIG. 9 is an exemplary diagram for describing an interface displaying a path through which power is supplied from a power storage device.
FIG. 10 is a block diagram of a management device according to an embodiment.

### Best Mode

The present disclosure relates to a method and apparatus for managing a power system including a plurality of solar modules. According to an embodiment of the present disclosure, provided is a method of managing a power system including a plurality of solar modules, the method including obtaining power generation information for the plurality of solar modules configuring the power system and power transfer information for at least one connection section through which power generated by the plurality of solar modules is transferred, generating information of interest about the power system, based on at least one of the power generation information and the power transfer information, and generating an interface displaying the information of interest on a virtual space representing the power system.

### Mode for Invention

Advantages and features of the present disclosure and methods of accomplishing the same may be understood more readily by reference to the following detailed description of the embodiments and the accompanying drawings. However, it should be understood that the present disclosure is not limited to the embodiments presented below, but may be implemented in various different forms, and include all transformations, equivalents, and substitutes included in the scope of the present disclosure. The embodiments presented below are provided to complete the present disclosure and to fully inform one of ordinary skill in the art of the scope of the present disclosure. In the description of the present disclosure, certain detailed explanations of related art are omitted when it is deemed that they may unnecessarily obscure the essence of the present disclosure.

Also, the terms used in the present specification are only used to describe specific embodiments, and are not intended to limit the present disclosure. Unless otherwise defined, all terms used in the present specification have the same meanings as commonly understood by one of ordinary skill in the art.

In the specification, an expression used in the singular encompasses the expression of the plural, unless it has a clearly different meaning in the context. Also, it is to be understood that terms such as "including" or "having", etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Further, the terms including ordinal numbers such as "first", "second", and the like used in the present specification may be used to describe various components, but the components should not be limited by the terms. The above terms are used only to distinguish one element from another.

The phrase such as "in an embodiment," "according to an embodiment," "related to an embodiment," or "according to an implementation of an embodiment" in the present specification does not necessarily all refer to the same embodiment. In addition, throughout the specification, an "embodiment" is an arbitrary classification for easily describing the present disclosure, and embodiments do not need to be mutually exclusive. For example, configurations mentioned for description of an embodiment may be applied and/or implemented in other embodiments, and may be applied and/or implemented with changes without departing from the scope of the present disclosure.

Some embodiments of the present disclosure may be represented by functional block configurations and various processing operations. Some or all of these functional blocks may be implemented by various numbers of hardware and/or software configurations that perform particular functions. For example, the functional blocks of the present disclosure may be implemented by one or more microprocessors or by circuit configurations for a certain function.

Also, for example, the functional blocks of the present disclosure may be implemented in various programming or scripting languages. The functional blocks may be implemented by algorithms executed in one or more processors. In addition, the present disclosure may employ general techniques for electronic environment setting, signal processing, and/or data processing. Terms such as "mechanism", "element", "means", and "configuration" may be used widely and are not limited as mechanical and physical configurations. In addition, terms such as "unit", "-er/or", and "module" denote a unit that processes at least one function or operation, which may be implemented in hardware or software, or implemented in a combination of hardware and software.

In addition, a connection line or a connection member between components shown in drawings is merely a functional connection and/or a physical or circuit connection. In an actual device, connections between components may be represented by various functional connections, physical connections, or circuit connections that are replaceable or added.

Also, some components in the drawings may be somewhat exaggerated in sizes or proportions. In addition, components shown in one drawing may not be shown in other drawings.

Hereinafter, the present disclosure will be described in detail with reference to accompanying drawings.

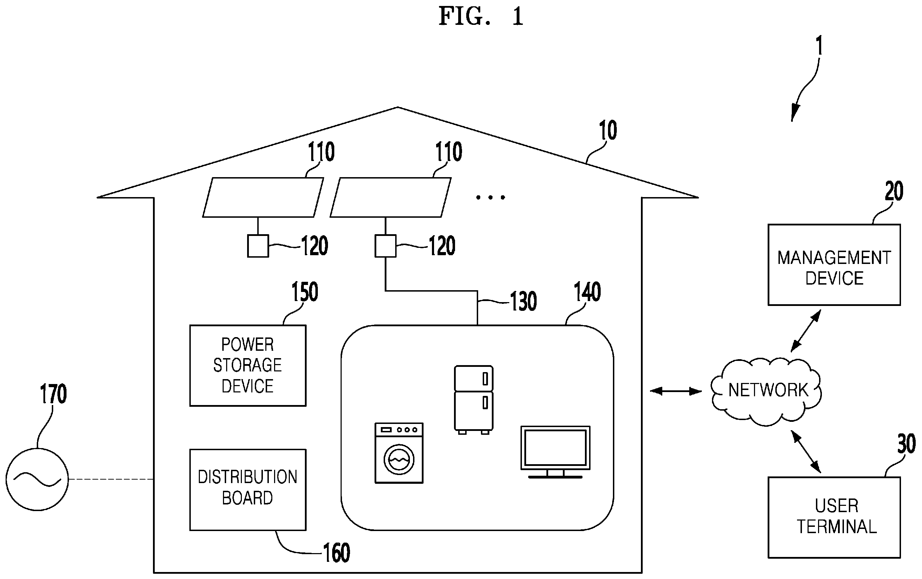

FIG. 1 is a schematic configuration diagram of a management system including a power system and a management device, according to an embodiment.

Referring to FIG. 1, a management system 1 according to an embodiment may include a power system 10, a management device 20, and a user terminal 30.

The power system 10 may include various locations where a plurality of solar modules 110 are provided. Here, the power system 10 may be understood as a house, a commercial facility, or a factory, but is not limited to a place that may be physically divided, and may be understood as including all unit systems subject to management.

The power system 10 may include the plurality of solar modules 110 and at least one connection section 130. In addition, the power system 10 may further include a plurality of power conversion devices 120, at least one load 140, at least one power storage device 150, at least one distribution board 160, and/or a power grid 170.

The solar module 110 is a device that generates electrical energy from solar light energy and may include a plurality of solar cells. The plurality of solar modules 110 may be connected to each other to form an array.

The power conversion device 120 refers to a device that is provided for each solar module 110 and supplies power generated by the solar module 110 to a power consumer of the power system 10, such as the load 140. The power conversion device 120 may be provided for each solar module 110 and include an inverter that converts direct current power generated by the solar module 110 into alternating current power, but is not limited thereto.

The connection section 130 refers to a section through which power is transferred within the power system 10. Although only one connection section 130 is shown in FIG. 1, various components of the power system 10 may have various types of electrical connection relationships according to designs. For example, the connection section 130 may include a connection section between the solar module 110 and the power conversion device 120, a connection section between the power conversion device 120 and the distribution board 160, and a connection section between the distribution board 160 and the load 140, but is not limited thereto.

The load 140 receives and uses power. The load 140 may receive electrical energy from the solar module 110, the power storage device 150, and the power grid 170, and use the same. When the power system 10 is a typical family home, the load 140 may include home appliances such as a washing machine, a refrigerator, and a television (TV).

The power storage device 150 receives power generated by the plurality of solar modules 110 and stores the same. The power storage device 150 may include an energy storage system (ESS) for storing generated power and efficiently supplying power to the load 140 when the load 140 needs power. The solar module 110 may have a daily generation amount changing according to weather or the amount of sunshine and is able to continuously generate power while the sun is up, and thus, the power system 10 may require the power storage device 150.

The distribution board 160 is a device that distributes electricity within the power system and may receive power supplied from a power supplier, such as the solar module 110 or the power storage device 150, and distribute power to various loads 140 or power grid 170 in the power system 10 as needed. In addition, the distribution board 160 may ensure stability of the power system by providing a safety function to protect the power system 10 from overload or short circuit.

The power grid 170 is an infrastructure system for generating, transmitting, and distributing electrical energy, and may include a power plant, a substation, and an electric wire networks. The power grid 170 may transfer electrical energy generated in a power plant to the power system 10 or transfer surplus power generated in the power system 10 to the outside of the power system 10.

Meanwhile, the power system 10 may further include at least one monitoring device (not shown) that monitors various types of information, such as statuses and present conditions of the above-described components. The monitoring device may be provided for each component of the power system 10, but is not limited thereto. The monitoring device may include at least one sensor that measures and/or collects physical quantities associated with each component of the power system 10. For example, the monitoring device may include various measuring instruments, power meters, ammeters, voltmeters, and data loggers.

According to an embodiment, components of the power system 10, such as the load 140, may form an Internet of things (IoT)-based network by being provided with the above-described monitoring device, and the power system 10 may provide monitoring information to the management device 20 by using the IoT-based network.

The management device 20 may include any type of device that manages a web and/or an application for providing services for calculating and/or providing information of interest related to the power system 10. According to an embodiment, the management device 20 may be provided adjacent to the power system 10 for each power system 10. According to another embodiment, the management device 20 may be implemented as a server that calculates the information of interest of each power system 10 and provides the information of interest related to each power system 10 to the user terminal 30 associated with the power system 10. However, the management device 20 is not limited thereto. The management device 20 may be implemented as at least one computing device that provides a command, code, a file, content, a service, or the like.

In the present disclosure, information of interest is various physical quantities related to the power system 10, and may include all types of information useful for a user to manage the power system 10.

For example, the information of interest may include an hourly power generation amount for each solar module 10, a transfer path of power generated for each module 10, a difference in a power generation amount of the solar module 10 between a specific time point and another time point, an hourly charging amount for each solar module 10 with respect to the power storage device 150, a charging rate of the power storage device 150, an hourly power consumption amount for each load 140, a transfer path of power consumed for each load 140, a transfer path of power supplied without passing through the power storage device 150 among power consumed for each load 140, and/or a transfer path of power supplied through the power storage device 150 among power consumed for each load 140, but is not limited thereto.

The user terminal 30 may include a terminal of a user, which is used to manage, monitor, or use the power system 10. The user using the user terminal 30 may include an owner or manager of at least some facilities, at least some areas, or at least some devices configuring the power system, and may include a subject of power generation/consumption or a related subject. Also, the user using the user terminal 30 may include, but are not limited to, a subject that operates the power system 10 or provides a service related to the power system 10.

The user terminal 30 may include a smartphone, a tablet personal computer (PC), a PC, a smart TV, a mobile phone, a personal digital assistant (PDA), a laptop computer, a media player, a micro server, a global positioning system (GPS) device, a digital broadcasting terminal, a navigation device, a kiosk, a digital camera, a home appliance, a camera-mounted device, or another mobile or non-mobile computing device. Also, the user terminal 30 may include a wearable terminal, such as a watch, glasses, or a hair band, including a communication function and a data processing function. The user terminal 30 may include any type of devices that communicate with another device through a network.

At least a portion of the power system 10, the management device 20, and the user terminal 30 may communicate with each other and/or with another external device through a network. The network is a comprehensive data communication network that allows different entities to communicate smoothly with each other, and may include wired Internet, wireless Internet, and a mobile wireless communication network.

For example, the network may include a local area network (LAN), a wide area network (WAN), a value-added network (VAN), a mobile radio communication network, a satellite communication network, or a combination thereof. Examples of wireless communication may include wireless LAN (Wi-Fi), Bluetooth, Bluetooth low energy, ZigBee, Wi-Fi direct (WFD), ultra-wideband (UWB), infrared data association (IrDA), and near field communication (NFC), but are not limited thereto.

According to an embodiment, the management device 20 may perform communication through the network and obtain, from the power system 10, at least one of power generation information for the plurality of solar modules 110, power transfer information for the connection section 130, power consumption information for the load 140, and power storage information for the power storage device 150.

Also, according to an embodiment, the management device 20 may perform communication through the network and transmit, to the user terminal 30 and/or another external device, the information of interest, an interface displaying the information of interest, and/or various types of information generated while calculating the information of interest.

In addition, according to an embodiment, the management device 20 may generate the interface displaying the information of interest and transmit the generated interface to the user terminal 30 by performing communication through the network. The user terminal 30 according to an embodiment may provide the received interface to the user through an output unit provided in the user terminal 30.

According to an embodiment, the management device 20 may control at least some components of the power system 10 by performing communication through the network. For example, in response to receiving a user input of blocking power supplied to a specific load or a user input of setting a limit range of a charging rate of the power storage device 150, the management device 20 may control at least some components of the power system 10 to block power supplied to the specific load or maintain the limit range of the charging rate of the power storage device 150.

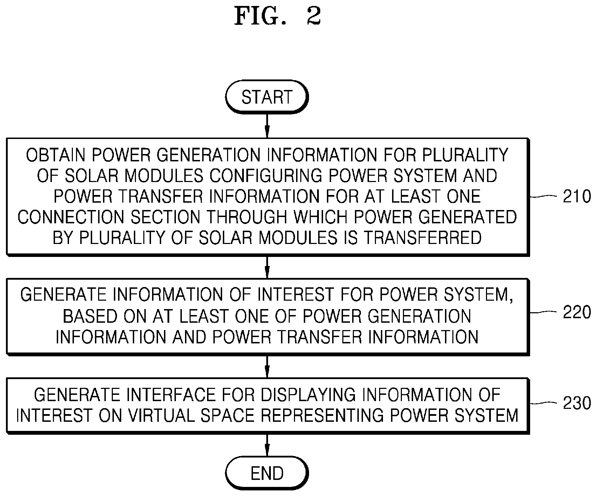

FIG. 2 illustrates an example of an operating method of a management device.

Referring to FIG. 2, in operation 210, the management device 20 may obtain the power generation information for the plurality of solar modules 110 configuring the power system 10 and the power transfer information for the at least one connection section 130 through which power generated by the plurality of solar modules 110 is transferred.

In operation 220, the management device 20 may generate the information of interest for the power system 10, based on at least one of power generation information and power transfer information.

According to an embodiment, the management device 20 may generate time series information of the hourly power generation amount for each of the plurality of solar modules 110, based on the power generation information. In addition, the management device 20 may determine a first hourly power generation amount for each of the plurality of solar modules 110 at a first time point, based on the time series information, and determine a second hourly power generation amount for each of the plurality of solar modules 110 at a second time point corresponding to the first time point. Also, when an absolute value of a difference between the first hourly power generation amount and the second hourly power generation amount is equal to or greater than a predetermined threshold value, the management device 20 may generate the difference as the information of interest.

Here, at least one of attributes mapped to a second time point may be the same as at least one of attributes mapped to a first time point, and the second time point may include a time point different from the first time point.

According to an embodiment, the management device 20 may generate, as the information of interest, at least one of the hourly power generation amount for each of the plurality of solar modules 110 and a transfer path of power generated for each of the plurality of solar modules 110, based on at least one of the power generation information and the power transfer information.

According to an embodiment, the management device 20 may further obtain the power storage information for the power storage device 150 that receives power generated by the plurality of solar modules 110 and stores the same. In this case, the management device 20 may generate, as the information of interest, at least one of the hourly charging amount for each of the plurality of solar modules 110 with respect to the power storage device 150 and the charging rate of the power storage device 150, based on at least one of the power generation information, the power transfer information, and the power storage information.

According to an embodiment, the management device 20 may further obtain the power consumption information for at least one load 140 configuring the power system 10. In this case, the management device 20 may generate, as the information of interest, at least one of the hourly power consumption amount for each load 140 and the transfer path of power consumed for each load 140, based on at least one of the power consumption information and the power transfer information.

According to an embodiment, the management device 20 may further generate, as the information of interest, a first path and a second path, based on at least one of the power generation information, the power consumption information, the power storage information, and the power transfer information, wherein the first path is a transfer path of power supplied without passing through the power storage device 150 among power consumed for each load 140 and the second path is a transfer path of power supplied through the power storage device 150.

In operation 230, the management device 20 may generate an interface displaying the information of interest on a virtual space representing the power system 10.

According to an embodiment, the virtual space may include a power storage device object corresponding to the power storage device 150. Here, the management device 20 may select the power storage device object and obtain a user input of setting a limit range of the charging rate of the power storage device 150. Also, the management device 20 may control the power storage device 150 to maintain the charging rate within the limit range based on the user input.

According to an embodiment, the virtual space may include at least one connection object respectively corresponding to the at least one connection section 130 and at least one load object respectively corresponding to the at least one load 140. In this case, the management device 20 may obtain a user input of selecting the connection object or the load object. In addition, the management device 20 may block power of the connection section 130 corresponding to the selected connection object or power supplied to the load 140 corresponding to the selected load object, based on the user input.

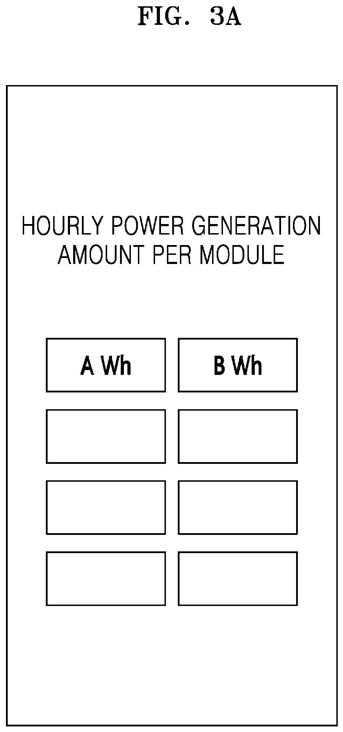

FIGS. 3A to 3C are exemplary diagrams for describing an interface displaying information of interest about a plurality of solar modules or loads.

Referring to FIGS. 3A to 3C, the management device 20 may generate an interface 300 displaying the information of interest. For example, the management device 20 may generate interface information to implement the interface 300 displaying the information of interest and transmit the interface information to the user terminal 30 to provide, to the user, the interface 300 through the output unit of the user terminal 30. Here, the interface 300 may be understood as a graphical user interface (GUI) for user convenience.

The management device 20 may obtain the power generation information for the plurality of solar modules 110 configuring the power system 10 and the power transfer information for the at least one connection section 130 through which power generated by the plurality of solar modules 110 is transferred.

According to an embodiment, the management device 20 may obtain the power generation information for each solar module 110, collected by the power conversion device 120 provided for each solar module 110. At this time, the power generation information includes power generation information for each specific time interval, such as a daily total power generation amount, an hourly power generation amount, a power generation amount per minute, an instantaneous power generation amount, a maximum power generation amount indicating peak power and a time period thereof, malfunction detection information, and/or performance anomaly detection information, but is not limited thereto.

According to an embodiment, the management device 20 may obtain the power transfer information for each connection section 130, collected from a measuring instrument provided for each connection section 130. In this case, the power transfer information may include, but is not limited to, a direction of power flow, power transfer amount by time period, a maximum power transfer amount, and/or anomaly detection information, such as overload or short circuit.

The management device 20 may generate the information of interest for the power system 10, based on at least one of the power generation information and the power transfer information. The management device 20 may generate the interface displaying the information of interest on the virtual space representing the power system 10.

According to an embodiment, the virtual space may be implemented in the form that reflects the actual power system 10 to provide convenience to a user who manages the power system 10. For example, in the virtual space, virtual objects corresponding to actual objects, such as the solar module 110 configuring the power system 10, may be placed at locations corresponding to locations of the actual objects.

According to an embodiment, the management device 20 may generate, as the information of interest, the hourly power generation amount of each solar module 110, based on at least one of the power generation information and the power transfer information. For example, the management device 20 may obtain a power generation amount per time, collected from the power conversion device 120, and add the same to calculate the hourly power generation amount for each solar module 110. In another example, the management device 20 may calculate the hourly power generation amount with high accuracy by correcting the power generation amount per time of the solar module 110 by using the power transfer amount of the connection section 130 through which power is supplied from each solar module 110.

FIG. 3A illustrates an example of the interface 300 displaying an hourly power generation amount per module of the plurality of solar modules 110, as the information of interest.

According to an embodiment, a plurality of solar module objects respectively corresponding to the plurality of solar modules 110 may be displayed on the interface 300, and the plurality of solar module objects may be arranged at locations to which actual locations of actual solar modules are reflected.

At this time, the hourly power generation amount for each of the plurality of solar modules 110 may be displayed on a corresponding solar module object. For example, when a current hourly power generation amount of a first module is A Wh and a current hourly power generation amount of a second module is B Wh, "A Wh" may be displayed on a first module object corresponding to the first module and "B Wh" may be displayed on a second module object corresponding to the second module.

According to an embodiment, the management device 20 may obtain the power storage information for the power storage device 150 that receives power generated by the plurality of solar modules 110 and stores the same. According to an embodiment, the management device 20 may obtain the power storage information from the power storage device 150. Here, the power storage information may include, but is not limited to, a current storage amount, maximum storage capacity, a charging speed, a discharging speed, a daily charging amount, a daily discharging amount, a lifespan and/or a performance status of the power storage device 150.

The management device 20 may generate, as the information of interest, at least one of the hourly charging amount for each of the plurality of solar modules 110 with respect to the power storage device 150 and the charging rate of the power storage device 150, based on at least one of the power generation information, the power transfer information, and the power storage information.

For example, the management device 20 may calculate the hourly charging amount for each of the plurality of solar modules 110 by combining a power generation amount by time period for each of the plurality of solar modules 110, a power flow direction for each connection section 130 connecting the power storage device 150 and each solar module 110, and the power transfer amount. In another example, the management device 20 may calculate the charging rate of the power storage device 150 by combining the current storage amount and maximum storage capacity of the power storage device 150.

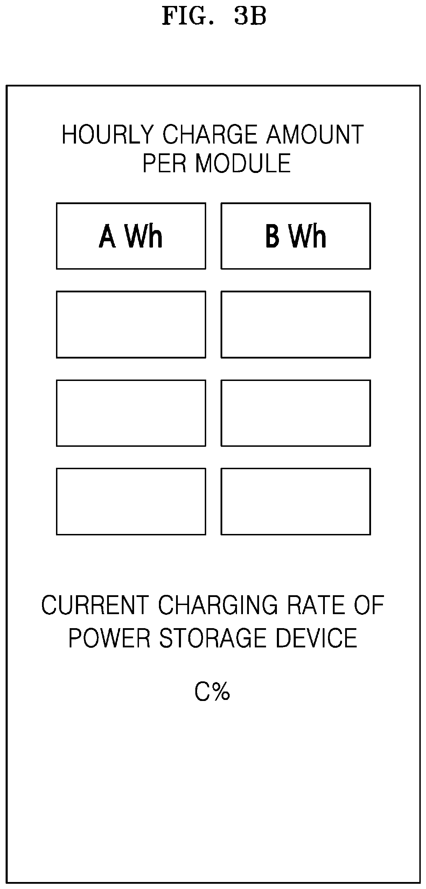

FIG. 3B illustrates an example of the interface 300 displaying, as the information of interest, the hourly charging amount for each of the plurality of solar modules 110 with respect to the power storage device 150 and the charging rate of the power storage device 150.

According to an embodiment, the hourly power generation amount for each of the plurality of solar modules 110 with respect to the power storage device 150 may be displayed on a corresponding solar module object. For example, when an amount of power stored in the power storage device 150 among whole power generated by a first module is A Wh and an amount of power stored in the power storage device 150 among whole power generated by a second module is B Wh, "A Wh" may be displayed on a first module object corresponding to the first module and "B Wh" may be displayed on a second module object corresponding to the second module. Also, a ratio of the current storage amount to the maximum storage capacity of the power storage device 150 may be displayed on the interface 300, as "C %".

According to an embodiment, the management device 20 may obtain the power consumption information for at least one load 140 configuring the power system 10. According to an embodiment, the management device 20 may obtain the power consumption information collected from the measuring instrument provided for each load 140. Here, the power consumption information may include, but is not limited to, a power consumption amount by time period, a daily power consumption amount, a maximum power consumption amount indicating peak power consumption and a time period thereof, a power consumption pattern, and/or energy efficiency.

The management device 20 may generate, as the information of interest, the hourly power consumption amount for each load 140, based on at least one of the power consumption information and the power transfer information. For example, the management device 20 may calculate the hourly power consumption amount for each load 140 by using at least one of a power transfer amount of a connection section supplied for each load 140 and an hourly power consumption amount collected for each load 140.

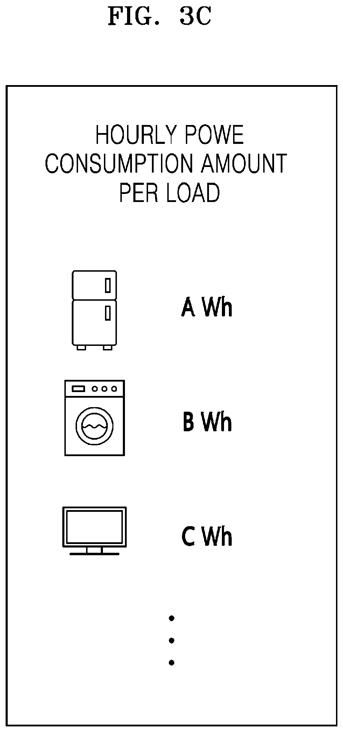

FIG. 3C illustrates an example of the interface 300 displaying the hourly power consumption amount for each load 140, as the information of interest.

According to an embodiment, the hourly power consumption amount for each load 140 may be displayed adjacent to a corresponding load object. For example, when an hourly power consumption amount of a first load is A Wh, an hourly power consumption amount of a second load is B Wh, and an hourly power consumption amount of a third load is C Wh, "A Wh" may be displayed adjacent to a first load object corresponding to the first load, "B Wh" may be displayed adjacent to a second load object, and "C Wh" may be displayed adjacent to a third load object.

According to an embodiment, the interface 300 may display power consumption amounts corresponding to the plurality of loads 140 in the form of a list. According to another embodiment, the interface 300 may display a plurality of load objects in a virtual space by reflecting actual locations of the plurality of loads 140, and display the power consumption amount for each load 140 adjacent to each load object.

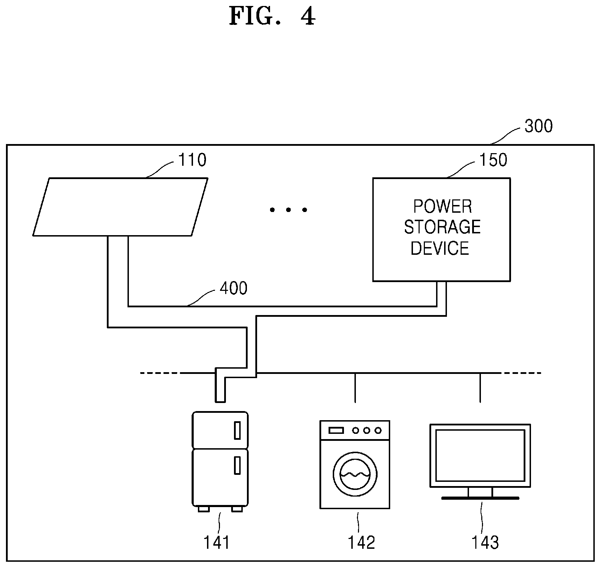

FIG. 4 is an exemplary diagram for describing an interface displaying a power transfer path for each of a plurality of solar modules.

Referring to FIG. 4, the management device 20 may generate, as the information of interest, a transfer path 400 of power generated for each of the plurality of solar modules 110, based on at least one of the power generation information and the power transfer information. The management device 20 may generate the interface 300 displaying, as the information of interest, the transfer path 400 of power generated for each of the plurality of solar modules 110.

According to an embodiment, the interface 300 may display a virtual space including a solar module object 110' corresponding to the solar module 110, a first load object 141' corresponding to a first load, a second load object 142' corresponding to a second load, a third load object 143' corresponding to a third load, and a power storage device object 150' corresponding to the power storage device 150.

At this time, the interface 300 may display the transfer path 400 of power generated for each solar module 110. For example, when a portion of power generated by a predetermined solar module 110 is transferred to the first load and a remaining portion is transferred to the power storage device 150, the transfer path 400 may include a power transfer path from the solar module object 110' to the power storage device object 150' and a power transfer path from the solar module object 110' to the first load object 141'.

According to an embodiment, the management device 20 may use a power transfer amount for each connection section 130to display a power transfer amount for each section according to a pipeline thickness. For example, a thickness of a section from the solar module object 110' to a branch point of the power storage device object 150' and the first load object 141' may be the sum of a thickness of a section from the branch point to the power storage device object 150' and a thickness of a section from the branch point to the first load object 141'.

Meanwhile, in FIG. 4, only the transfer path 400 corresponding to one solar module 110 is illustrated. According to an embodiment, when a plurality of solar module objects 110' are displayed on the interface 300, a plurality of transfer paths 400 respectively corresponding to the plurality of solar modules 110 may also be displayed. In this case, the plurality of transfer paths 400 may be distinguished by colors respectively corresponding to the plurality of solar modules 110.

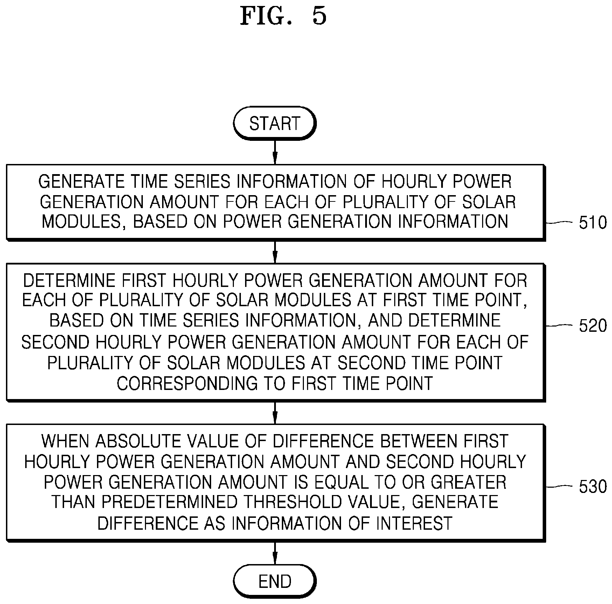

FIG. 5 is an exemplary diagram for describing an embodiment of a process of generating information of interest.

Referring to FIG. 5, in operation 510, the management device 20 may generate the time series information of the hourly power generation amount for each of the plurality of solar modules 110, based on the power generation information.

According to an embodiment, the time series information may include a power generation physical quantity calculated at each time point in a preset cycle. The power generation physical quantity may include a current, a voltage, and power. In this case, the management device 20 may generate the time series information by mapping the power generation physical quantity calculated at each time point in the preset cycle with an attribute.

According to an embodiment, the attribute may include a time-related attribute such as a year, a month, a day, and time period. Also, according to an embodiment, the attribute may include an environment-related attribute such as weather, a temperature, and humidity. For example, the time series information may include the power generation physical quantity for each time point, which is mapped to the time-related attribute such as a year, a month, a day, and a time period, and the weather-related attribute such as weather, a temperature, and humidity.

In operation 520, the management device 20 may determine a power generation physical quantity for each of the plurality of solar modules 110 at a first time point, based on the time series information, and determine a power generation physical quantity for each of the plurality of solar modules 110 at a second time point corresponding to the first time point. For example, the management device 20 may determine the first hourly power generation amount for each of the plurality of solar modules 110 at the first time point, based on the time series information, and determine the second hourly power generation amount for each of the plurality of solar modules 110 at the second time point corresponding to the first time point.

Meanwhile, according to an embodiment, the hourly power generation amount may represent the amount of power generated by the solar module 110 for one hour, and may be replaced with a daily power generation amount, power generation amount per minute, or an instantaneous power generation amount. Also, according to an embodiment, the hourly power generation amount at a specific time point may represent a total amount of power generated up to a time point before one hour from the specific time point.

According to another embodiment, the hourly power generation amount may be calculated by dividing a total amount of power generated for a predetermined time with the specific time point as the end, by the predetermined time. For example, an hourly power generation amount of a specific solar module 110 may include a daily average value, a monthly average value, or a yearly average value of the amount of power generated by the solar module 110 for one hour. In another example, the hourly power generation amount of the specific solar module 110 may include a power generation amount per hour, calculated by using the amount of power generated by the solar module 110 during a specific time period.

Here, at least one of attributes mapped to the second time point may be the same as at least one of attributes mapped to the first time point, and the second time point may include a time point different from the first time point. For example, an attribute that is mapped identically to the first time point and the second time point may include a time period. In this case, a date mapped to the first time point and a date mapped to the second time point may be different from each other, and thus, the first hourly power generation amount for each solar module 110 at the first time point and the second hourly power generation amount for each solar module 110 at the second time point may represent hourly power generation amounts in same time periods on different dates.

In another example, an attribute that is mapped identically to the first time point and the second time point may include a day and a month. For example, the first time point may be December 31, 2023, and the second time point may be December 31, 2022. In this case, the first hourly power generation amount for each solar module 110 at the first time point may include a monthly average hourly power generation amount for each solar module 110 in December 2023. Also, the second hourly power generation amount for each solar module 110 at the second time point may include a monthly average hourly power generation amount in December 2022.

In another example, an attribute that is mapped identically to the first time point and the second time point may include weather. In this case, a date mapped to the first time point and a date mapped to the second time point may be different from each other, and thus, the first hourly power generation amount for each solar module 110 at the first time point and the second hourly power generation amount for each solar module 110 at the second time point may represent hourly power generation amounts on different dates having same weather.

In another example, an attribute that is mapped identically to the first time point and the second time point may include humidity. In this case, a date mapped to the first time point and a date mapped to the second time point may be different from each other, and thus, the first hourly power generation amount for each solar module 110 at the first time point and the second hourly power generation amount for each solar module 110 at the second time point may represent hourly power generation amounts on different dates having same humidity.

In operation 530, when the absolute value of the difference between the first hourly power generation amount and the second hourly power generation amount is equal to or greater than the predetermined threshold value, the management device 20 may generate the difference as the information of interest.

According to an embodiment, the difference between the first hourly power generation amount and the second hourly power generation amount may include a simple sum of differences between hourly power generation amounts at the first time point and hourly power generation amounts at the second time point for the plurality of solar modules 110 configuring the power system 10, or a sum of absolute values of the differences.

For example, when the plurality of solar modules 110 include a first module and a second module, an hourly power generation amount of the first module at the first time point may be A Wh, an hourly power generation amount of the first module at the second time point may be A' Wh, an hourly power generation amount of the second module at the first time point may be B Wh, and an hourly power generation amount of the second module at the second time point may be B' Wh.

In this case, the difference between the first hourly power generation amount and the second hourly power generation amount may include a sum of a first difference between A and A' and a second difference between B and B', or a sum of an absolute value of the first difference and an absolute value of the second difference.

According to an embodiment, the difference between the first hourly power generation amount and the second hourly power generation amount may include a difference in which an absolute value has a maximum value from among differences between hourly power generation amounts at the first time point and hourly power generation amounts at the second time point for the plurality of solar modules 110 configuring the power system 10.

For example, the difference between the first hourly power generation amount and the second hourly power generation amount may represent a difference in which an absolute value is greater from among the first difference between A and A' and the second difference between B and B'.

According to an embodiment, the management device 20 may compare the absolute value of the difference between the first hourly power generation amount and the second hourly power generation amount with a predetermined threshold value. According to an embodiment, the predetermined threshold value may be set by a user input. For example, the predetermined threshold value may be set as a certain percentage of an ideal hourly power generation amount per module. For example, when the ideal hourly power generation amount per module is 300 Wh, the predetermined threshold value may be set to 60 Wh, which is 20 % of 300 Wh per module.

According to another embodiment, the predetermined threshold value may be set as a certain percentage of a monthly average or yearly average hourly power generation amount per module. At this time, the predetermined threshold value may automatically change over time. For example, when the monthly average hourly power generation amount per module in December 2023 is 200 Wh, the predetermined threshold value as of December 31, 2023 may be set to 40 Wh, which is 20 % of 200 Wh per module, and when the monthly average hourly power generation amount per module in January 2024 is 180 Wh, the predetermined threshold value as of January 31, 2024 may be set to 36 Wh, which is 20 % of 180 Wh per module. Meanwhile, the percentage for determining the predetermined threshold value is not limited thereto.

When the difference between the first hourly power generation amount and the second hourly power generation amount is equal to or greater than the predetermined threshold value, the management device 20 may generate the difference as the information of interest. Accordingly, the management device 20 may monitor a significant change in the power generation amount for each module and provide change information to the user, allowing the user to recognize an attribute that was not considered in advance or recognize an unexpected anomaly in a module.

The hourly power generation amount may be directly associated with power generation efficiency of the solar module 110. In other words, the management device 20 may monitor differences in daily efficiency, monthly efficiency, and yearly efficiency for each solar module 110, and when the difference in efficiency between a specific time point and another time point is equal to or greater than a threshold, provide the time points and the difference to the user.

In addition, the management device 20 may monitor differences in efficiency at time points representing same weather, a same temperature, or a same degree of incident light, and when the difference in efficiency between a specific time point and another time point is equal to or greater than a threshold, provide the time points and the difference to the user.

Through the information of interest provided, the user may discover an environmental factor that is difficult to predict from among factors that affect power generation efficiency of a module, and identify an operational anomaly for each module, whose cause is difficult to determine.

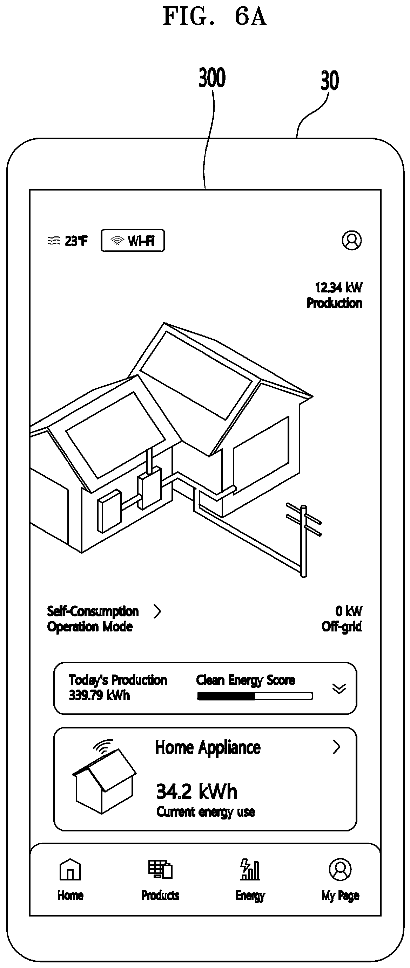

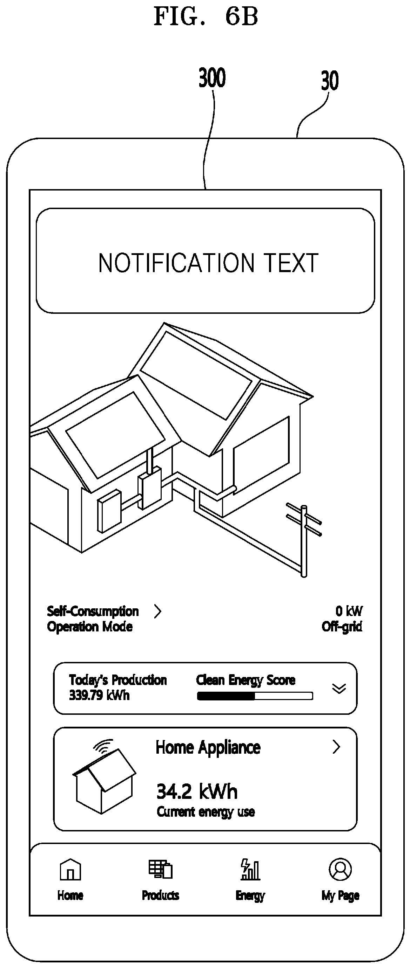

FIGS. 6A and 6B are exemplary diagrams for describing an interface for providing a notification based on power system information.

Referring to FIGS. 6A and 6B, when the difference between the first hourly power generation amount and the second hourly power generation amount is greater than the predetermined threshold value, the management device 20 may generate the difference as information of interest and provide a notification indicating that the difference between the first hourly power generation amount and the second hourly power generation amount is equal to or greater than the predetermined threshold value.

FIG. 6A illustrates a diagram of the interface 300 displayed on the user terminal 30. The interface 300 may display a virtual space in which the power system 10 is reflected and display various types of information related to the power system 10.

When the difference between the first hourly power generation amount and the second hourly power generation amount is equal to or greater than the predetermined threshold value, the management device 20 may generate notification information indicating that the difference between the first hourly power generation amount and the second hourly power generation amount is equal to or greater than the predetermined threshold value. The management device 20 may display notification text on the user terminal 30 by transmitting the notification information to the user terminal 30 by using communication through a network. FIG. 6B illustrates an example of the user terminal 30 displaying the notification text.

According to an embodiment, the first time point may include a current time point and the first hourly power generation amount may represent the hourly power generation amount corresponding to the current time point. In this case, the management device 20 provides the notification indicating that the difference between the first hourly power generation amount and the second hourly power generation amount is equal to or greater than the predetermined threshold value, so that, when there is currently a significant change in the power generation amount for each solar module 110 in comparison with other dates of a same attribute, the user may easily recognize the change.

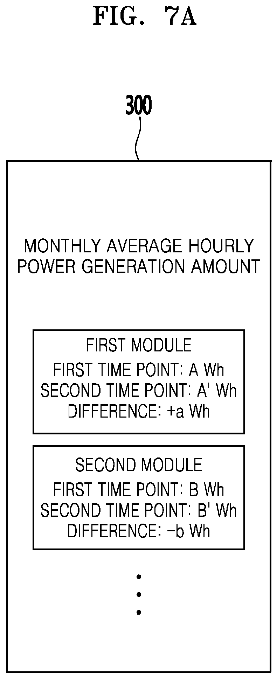

FIGS. 7A to 7D are exemplary diagrams for describing an interface displaying a difference in power generation information for each solar module between a first time point and a second time point.

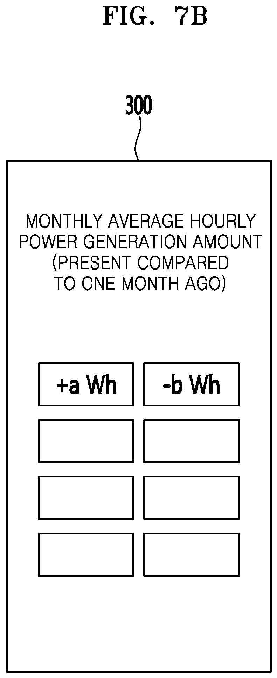

FIGS. 7A and 7B illustrate examples of the interface 300 displaying a difference in a monthly average hourly power generation amount for each solar module 110, the difference being generated as the information of interest. FIG. 7A illustrates an example of the interface 300 displaying a difference in an hourly power generation amount for each solar module 110 in the form of a list, and FIG. 7B illustrates an example of the interface 300 displaying the hourly power generation amount for each solar module 110 in a virtual space reflecting actual locations of the solar modules 110.

According to an embodiment, the first time point may include the current time point, and the second time point may include a time point before one month from the current time point. In this case, the first hourly power generation amount may represent a monthly average hourly power generation amount calculated according to power generation information from one month ago to the current time point, and the second hourly power generation amount may represent a monthly average hourly power generation amount calculated according to power generation information from two months ago to one month ago.

In other words, the first hourly power generation amount may represent a monthly average hourly power generation amount for one month calculated backward from the present, and the second hourly power generation amount may represent a monthly average hourly power generation amount for one month calculated backward from one month ago.

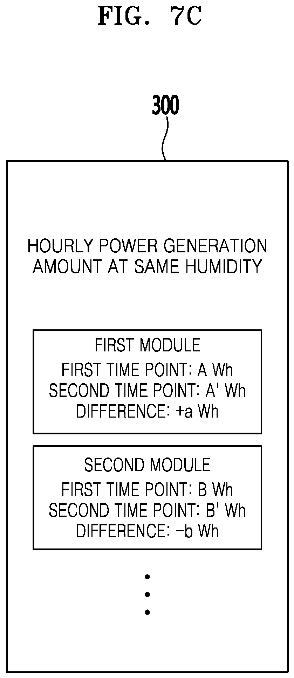

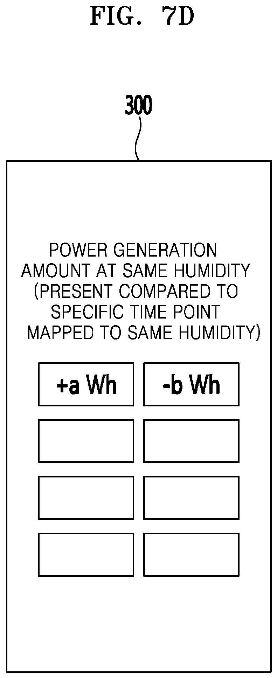

FIGS. 7C and 7D are examples of the interface 300 displaying a difference in an hourly power generation amount for each solar module 110 at same humidity, the difference being generated as the information of interest. FIG. 7C illustrates an example of the interface 300 displaying a difference in an hourly power generation amount for each solar module 110 in the form of a list, and FIG. 7D illustrates an example of the interface 300 displaying the hourly power generation amount for each solar module 110 in a virtual space reflecting actual locations of the solar modules 110.

According to an embodiment, the first time point may include a current time point representing x% humidity, and the second time point may include a past time point representing x% humidity. In this case, the first hourly power generation amount may represent a power generation amount generated during a recent one hour, and the second hourly power generation amount may represent a power generation amount generated during one hour at the second time point.

In other words, the first hourly power generation amount may represent a power generation amount generated during the recent one hour, and the second hourly power generation amount may represent a power generation amount generated during one hour at the past time point at same humidity as the current time point.

A difference between the first hourly power generation amount and the second hourly power generation amount for the first module may be +a Wh, and a difference between the first hourly power generation amount and the second hourly power generation amount for the second module may be -b Wh.

According to an embodiment, the management device 20 may generate the interface 300 displaying a solar module object in which the difference, i.e., a change, is in a positive number in a first color and displaying a solar module object in which a change in a negative number in a second color.

For example, when the hourly power generation amount of the first module have increased, the management device 20 may display a color of the first module object in red and display an amount of change inside the first module object. Also, when the hourly power generation amount of the second module have decreased, the management device 20 may display a color of the second module object in blue and display an amount of change inside the second module object.

The management device 20 may generate the interface 300 displaying brightness of the first color and brightness of the second color differently depending on a size of an absolute value of the difference, i.e., the change. For example, in a third module and a fourth module in which differences both represent positive numbers, when the difference of the third module has a greater value, the management device 20 may generate the interface 300 displaying brightness of a third module object higher than brightness of a fourth module object.

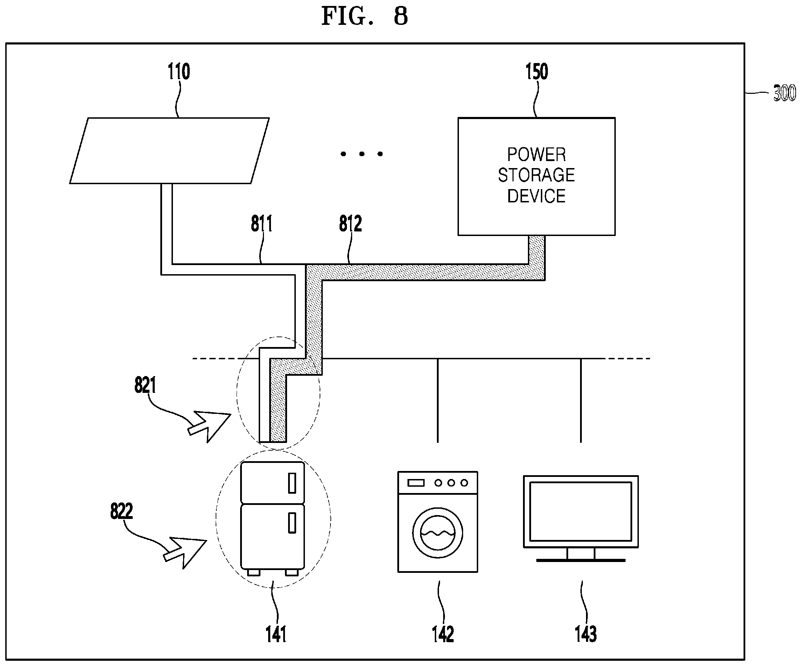

FIG. 8 is an exemplary diagram for describing an interface displaying a power transfer path for each load.

Referring to FIG. 8, the management device 20 may generate, as the information of interest, a transfer path of power consumed for each load 140, based on at least one of the power consumption information and the power transfer information. The management device 20 may generate the interface 300 displaying, as the information of interest, the transfer path of power consumed for each load 140.

According to an embodiment, the interface 300 may display a virtual space including the solar module object 110' corresponding to the solar module 110, the first load object 141' corresponding to the first load, the second load object 142' corresponding to the second load, the third load object 143' corresponding to the third load, and the power storage device object 150' corresponding to the power storage device 150.

At this time, the interface 300 may display the transfer path of power consumed for each load 140. For example, when a portion of power consumed by the first load is supplied from a certain solar module 110 and a remaining portion thereof is supplied from the power storage device 150, the transfer path may include a power transfer path 811 from the solar module object 110' to the first load object 141' and a power transfer path 812 from the power storage device object 150' to the first load object 141'.

According to an embodiment, the management device 20 may use a power transfer amount for each connection section 130 to display a power transfer amount for each section according to a pipeline thickness. For example, a thickness of a section from a branch point of the solar module object 110' and the power storage device object 150' to the first load object 141' may be the sum of a thickness from the solar module object 110' to the branch point and a thickness from the power storage device object 150' to the branch point.

Meanwhile, only a transfer path corresponding to one load 140 is shown in FIG. 8. According to an embodiment, a plurality of transfer paths respectively corresponding to the loads 140, such as the first load to the third load, may be displayed together. In this case, the plurality of transfer paths may be distinguished by colors respectively corresponding to the plurality of loads 140.

According to an embodiment, the management device 20 may obtain the power storage information for the power storage device 150 for receiving and storing power generated by the plurality of solar modules 110, and the power consumption information for at least one load 140 configuring the power system 10.

In this case, the management device 20 may further generate, as the information of interest, the first path 811 and the second path 812, based on at least one of the power generation information, the power consumption information, the power storage information, and the power transfer information, wherein the first path is a transfer path of power supplied without passing through the power storage device 150 among power consumed for each load 140 and the second path is a transfer path of power supplied through the power storage device 150.

According to an embodiment, when there are a plurality of power supply paths for one load 140, the management device 20 may generate the interface 300 distinguishably displaying the first path 811 and the second path 812, wherein the first path 811 is a transfer path of power supplied without passing through the power storage device 150 among power supplied to the specific load 140 and the second path 812 is a transfer path of power supplied through the power storage device 150. For example, the management device 20 may generate the interface 300 in which the first path 811 and the second path 812 are displayed in different colors, patterns, and/or textures.

According to an embodiment, the virtual space may include a plurality of connection objects corresponding to the plurality of connection sections 130 and a plurality of load objects corresponding to the plurality of loads 140. In this case, the management device 20 may obtain a user input of selecting a specific connection object or a specific load object. In addition, the management device 20 may block power of the connection section 130 corresponding to the selected connection object or power supplied to the load 140 corresponding to the selected load object, based on the user input.

For example, the management device 20 may obtain a user input 822 of selecting the first load object 141' or a user input 821 of selecting a connection section adjacent to the first load object 141'. The management device 20 may block power supplied to the first load corresponding to the first load object 141' in response to the user input. For example, the management device 20 may block power supplied to the first load by communicating with at least some components of the power system 10, such as each load 140, through a network.

Accordingly, the user may intuitively control the power system 10. Also, power may be controlled without having to directly access individual loads, and thus, user convenience may be improved.

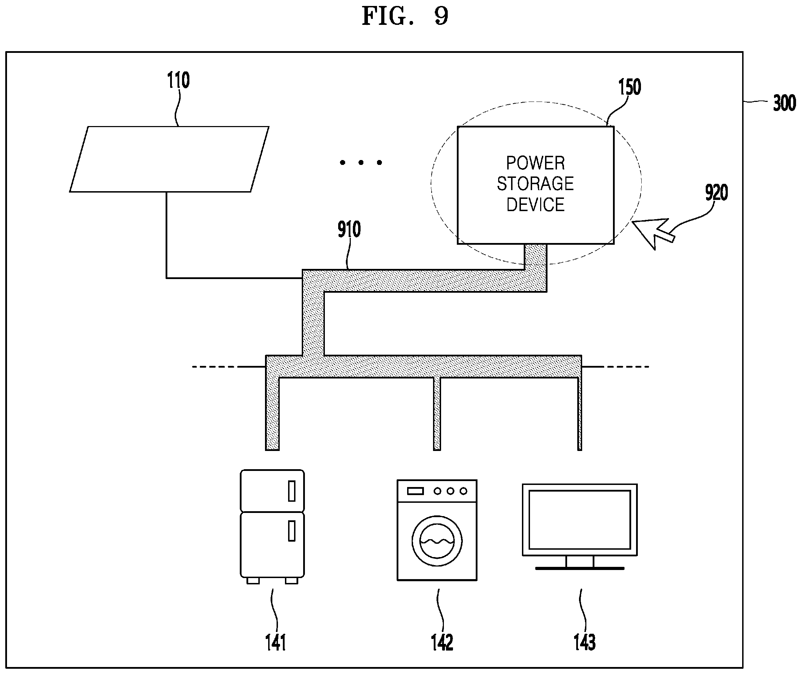

FIG. 9 is an exemplary diagram for describing an interface displaying a path through which power is supplied from a power storage device.

Referring to FIG. 9, the management device 20 may generate, as the information of interest, a transfer path 910 of power supplied from the power storage device, based on at least one of the power storage information and the power transfer information. The management device 20 may generate the interface 300 displaying, as the information of interest, the transfer path 910 of power supplied from the power storage device.

According to an embodiment, the interface 300 may display a virtual space including the solar module object 110' corresponding to the solar module 110, the first load object 141' corresponding to the first load, the second load object 142' corresponding to the second load, the third load object 143' corresponding to the third load, and the power storage device object 150' corresponding to the power storage device 150.

In this case, the interface 300 may display the transfer path 910 of power supplied from the power storage device. For example, when power is supplied from the power storage device to the first load, the second load, and the third load, a transfer path 900 may include a power transfer path from the power storage device object 150' to the first load object 141', a power transfer path from the power storage device object 150' to the second load object 142', and a power transfer path from the power storage device object 150' to the third load object 143'.

According to an embodiment, the management device 20 may use a power transfer amount for each connection section 130 to display a power transfer amount for each section according to a pipeline thickness. For example, a thickness of a section from a bus connected between the first load object 141' to the third load object 143' to the power storage device object 150' may be the sum of a thickness of a section from the bus to the first load object 141', a thickness of a section from the bus to the second load object 142', and a thickness of a section from the bus to the third load object 143'.

According to an embodiment, the management device 20 may select the power storage device object 150' and obtain a user input of setting a limit range of the charging rate of the power storage device 150. Also, the management device 20 may control the power storage device 150 to maintain the charging rate within the limit range based on the user input. At this time, the limit range of the charging rate may include at least one of a minimum value and a maximum value at which a charging level of the power storage device 150 is to be maintained. Accordingly, the power storage device 150 may be protected from overcharge and overdischarge.

For example, the management device 20 may obtain a user input 920 of selecting the power storage device object 150'. The management device 20 may display a setting area for setting the limit range of the charging rate of the power storage device 150 on the interface 300, in response to user input. Then, the management device 20 may obtain a user input of setting the limit range of the charging rate of the power storage device 150, as a user input using the setting area.

The management device 20 may control the power storage device 150 to maintain the charging rate within the limit range, in response to obtaining the user input of setting the limit range of the charging rate of the power storage device 150. For example, the management device 20 may maintain the charging rate of the power storage device 150 within the limit range by communicating with at least some components of the power system 10, such as the power storage device 150.

Accordingly, the user may reasonably perform power management within the power system 10 as needed, such as setting a minimum charging rate of the power storage device 150 high in consideration of an expected peak power consumption time.

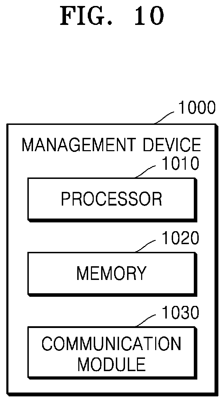

FIG. 10 is a block diagram of a management device according to an embodiment. A management device 1000 shown in FIG. 10 may correspond to the management device 20 shown in FIG. 1.

Referring to FIG. 10, the management device 1000 may include a processor 1010, a memory 1020, and a communication module 1030. FIG. 10 illustrates only components of the management device 1000, which are related to an embodiment. Thus, it would be obvious to one of ordinary skill in the art that the management device 1000 may further include general-purpose components other than the components shown in FIG. 10.

The processor 1010 controls overall operations of the management device 1000. For example, the processor 1010 may generally control the memory 1020, the communication module 1030, an input unit (not shown), and/or an output unit (not shown) by executing programs stored in the memory 1020. The processor 1010 may execute the programs stored in the memory 1020 to control operations of the management device 1000.

The processor 1010 may control at least some of the operations of the management device 1000 described above with reference to FIGS. 1 to 9. For example, the processor 1010 may control the communication module 1030 to obtain power generation information for a plurality of solar modules configuring a power system and power transfer information for at least one connection section through which power generated by the plurality of solar modules is transferred, generate information of interest for the power system based on at least one of the power generation information and the power transfer information, and generate an interface displaying the information of interest in a virtual space representing the power system.

Meanwhile, specific examples of how the processor 1010 operates are the same as those described above with reference to FIGS. 1 to 9. Thus, hereinafter, detailed description of the operations of the processor 1010 is omitted.

The processor 1010 may be realized by using at least one of an application-specific integrated circuit (ASIC), a digital signal processor (DSP), a digital signal processing device (DSPD), a programmable logic device (PLD), a field programmable gate array (FPGA), a controller, a micro-controller, a microprocessor, and electric units for performing other functions.

The memory 1020 is hardware storing various types of data processed in the management device 1000, and may store a program for various operations, processes, and control by the processor 1010.

The memory 1020 may include a random access memory (RAM) such as a dynamic random access memory (DRAM) or a static random access memory (SRAM), a read-only memory (ROM), an electrically erasable programmable read-only memory (EEPROM), CD-ROM, Blu-ray or another optical disk storage, a hard disk drive (HDD), a solid state drive (SSD), or a flash memory.

The communication module 1030 may include at least one component that allows the management device 1000 to perform wired/wireless communication with at least a portion of the power system 10, the user terminal 30, and/or other external devices. For example, the communication module 1030 may include a short-range communication unit and/or a mobile communication unit.

The embodiments according to the present disclosure may be implemented in a form of a computer program executable by various components on a computer, and such a computer program may be recorded in a computer-readable medium. Here, the computer-readable medium may include hardware devices specially designed to store and execute program instructions, such as magnetic media, such as a hard disk, a floppy disk, and a magnetic tape, optical recording media, such as CD-ROM and DVD, magneto-optical media such as a floptical disk, and read-only memory (ROM), random-access memory (RAM), and a flash memory, but is not limited thereto.

The computer program may be specially designed for the present disclosure or well known to one of ordinary skill in the computer software field. Examples of the computer program include not only machine codes generated by a compiler, but also high-level language codes executable by a computer by using an interpreter or the like.

According to an embodiment, a method according to various embodiments of the present disclosure may be provided by being included in a computer program product. The computer program products are products that can be traded between sellers and buyers. The computer program product may be distributed in a form of machine-readable storage medium (for example, a compact disc read-only memory (CD-ROM)), or distributed through an application store (for example, Play StoreTM) or directly or online between two user devices (for example, download or upload). In the case of online distribution, at least a part of the computer program product may be at least temporarily stored or temporarily generated in the machine-readable storage medium such as a server of a manufacturer, a server of an application store, or a memory of a relay server.

Unless an order is clearly stated or unless otherwise stated, operations configuring a method according to the present disclosure may be performed in an appropriate order. The present disclosure is not necessarily limited by an order the operations are described. In the present disclosure, the use of all examples or exemplary terms, such as "etc.", is merely for describing the present disclosure in detail and the scope of the present disclosure is not limited by those examples or exemplary terms unless defined in the claims. Also, it would be obvious to one of ordinary skill in the art that various modifications, combinations, and changes may be configured according to design conditions and factors within the scope of claims or equivalents.

Therefore, the scope of the present disclosure should not be determined limitedly based on the above-described embodiments, and not only the appended claims but also all ranges equivalent to or equivalently changed from the claims are within the scope of the present disclosure.

## Claims

1. A method of managing a power system comprising a plurality of solar modules, the method comprising:
obtaining power generation information for the plurality of solar modules configuring the power system and power transfer information for at least one connection section through which power generated by the plurality of solar modules is transferred;
generating information of interest about the power system, based on at least one of the power generation information and the power transfer information; and
generating an interface displaying the information of interest on a virtual space representing the power system.

2. The method of claim 1, wherein
the generating of the information of interest comprises:
generating time series information of an hourly power generation amount for each of the plurality of solar modules, based on the power generation information; determining a first hourly power generation amount for each of the plurality of solar modules at a first time point, based on the time series information, and determining a second hourly power generation amount for each of the plurality of solar modules at a second time point corresponding to the first time point; and
when an absolute value of a difference between the first hourly power generation amount and the second hourly power generation amount is equal to or greater than a predetermined threshold value, generating the difference as the information of interest, wherein
at least one of attributes mapped to the second time point is the same as at least one of attributes mapped to the first time point, and
the second time point comprises a different time point from the first time point.

3. The method of claim 1, wherein
the generating of the information of interest comprises
generating, as the information of interest, at least one of an hourly power generation amount for each of the plurality of solar modules and a transfer path of power generated for each of the plurality of solar modules, based on at least one of the power generation information and the power transfer information.

4. The method of claim 1, wherein
the obtaining comprises further obtaining power storage information about a power storage device for receiving and storing power generated by the plurality of solar modules, and
the generating of the information of interest comprises
generating, as the information of interest, at least one of an hourly charging amount for each of the plurality of solar modules with respect to the power storage device and a charging rate of the power storage device, based on at least one of the power generation information, the power transfer information, and the power storage information.

5. The method of claim 4, wherein
the virtual space includes a power storage device object corresponding to the power storage device, and
the generating of the interface comprises:
selecting the power storage device object and obtaining a user input for setting a limit range of the charging rate of the power storage device; and
controlling the power storage device to maintain the charging rate within the limit range based on the user input.

6. The method of claim 4, wherein
the obtaining further comprises
further obtaining power consumption information about at least one load configuring the power system, and
the generating of the information of interest further comprises
generating, as the information of interest, at least one of an hourly power consumption amount for each load and a transfer path of power consumed for each load, based on at least one of the power consumption information and the power transfer information.

7. The method of claim 6, wherein
the generating of the information of interest further comprises
further generating, as the information of interest, a first path that is a transfer path of power supplied without passing through the power storage device among the power consumed for each load, and a second path that is a transfer path of power supplied through the power storage device, based on at least one of the power generation information, the power consumption information, the power storage information, and the power transfer information.

8. The method of claim 6, wherein
the virtual space includes at least one connection object respectively corresponding to the at least one connection section and at least one load object respectively corresponding to the at least one load, and
the generating of the interface comprises:
obtaining a user input for selecting the connection object or the load object; and blocking power supplied to a connection section corresponding to the selected connection object or power supplied to a load corresponding to the selected load object, based on the user input.

9. An apparatus for managing a power system comprising a plurality of solar modules, the apparatus comprising:
a communication module configured to perform communication;
a memory storing at least one program; and
a processor configured to operate by executing the at least one program,
wherein the processor is further configured to:
control the communication module to obtain power generation information for the plurality of solar modules configuring the power system and power transfer information for at least one connection section through which power generated by the plurality of solar modules is transferred;
generate information of interest about the power system, based on at least one of the power generation information and the power transfer information; and generate an interface displaying the information of interest on a virtual space representing the power system.

10. The apparatus of claim 9, wherein
the generating of the information of interest comprises
generating time series information of an hourly power generation amount for each of the plurality of solar modules, based on the power generation information; determining a first hourly power generation amount for each of the plurality of solar modules at a first time point, based on the time series information, and determining a second hourly power generation amount for each of the plurality of solar modules at a second time point corresponding to the first time point; and when an absolute value of a difference between the first hourly power generation amount and the second hourly power generation amount is equal to or greater than a predetermined threshold value, generating the difference as the information of interest,
wherein at least one of attributes mapped to the second time point is the same as at least one of attributes mapped to the first time point, and
the second time point comprises a different time point from the first time point.

11. The apparatus of claim 9, wherein
the generating of the information of interest comprises
generating, as the information of interest, at least one of an hourly power generation amount for each of the plurality of solar modules and a transfer path of power generated for each of the plurality of solar modules, based on at least one of the power generation information and the power transfer information.

12. The apparatus of claim 9, wherein
the controlling of the communication module comprises
controlling the communication module to further obtain power storage information about a power storage device for receiving and storing power generated by the plurality of solar modules, and
the generating of the information of interest comprises
generating, as the information of interest, at least one of an hourly charging amount for each of the plurality of solar modules with respect to the power storage device and a charging rate of the power storage device, based on at least one of the power generation information, the power transfer information, and the power storage information.

13. The apparatus of claim 12, wherein
the virtual space includes a power storage device object corresponding to the power storage device, and
the generating of the interface comprises:
controlling the communication module to select the power storage device object and obtain a user input for setting a limit range of the charging rate of the power storage device; and
controlling the power storage device to maintain the charging rate within the limit range based on the user input.

14. The apparatus of claim 12, wherein
the controlling of the communication module further comprises
controlling the communication module to further obtain power consumption information about at least one load configuring the power system, and
the generating of the information of interest further comprises
generating, as the information of interest, at least one of an hourly power consumption amount for each load and a transfer path of power consumed for each load, based on at least one of the power consumption information and the power transfer information.

15. The apparatus of claim 14, wherein
the generating of the information of interest further comprises
further generating, as the information of interest, a first path that is a transfer path of power supplied without passing through the power storage device among the power consumed for each load, and a second path that is a transfer path of power supplied through the power storage device, based on at least one of the power generation information, the power consumption information, the power storage information, and the power transfer information.

16. The apparatus of claim 14, wherein
the virtual space includes at least one connection object respectively corresponding to the at least one connection section and at least one load object respectively corresponding to the at least one load, and
the generating of the interface comprises:
controlling the communication module to obtain a user input for selecting the connection object or the load object; and
blocking power supplied to a connection section corresponding to the selected connection object or power supplied to a load corresponding to the selected load object, based on the user input.

17. A computer-readable recording medium having recorded thereon a program for executing the method of claim 1 on a computer.
